# EUROPEAN PATENT APPLICATION

(11) **EP 4 667 299 A1**
(43) Date of publication of application: **24.12.2025**
(21) Application number: 24183475.3
(22) Date of filing: 20.06.2024
(51) Int. Cl.: B60S 1/38, B60S 1/40

(54) **WIPER STRUCTURE AND WIPER ACCESSORY THEREOF**

(71) Applicant: Danyang UPC Auto Parts Co., Ltd., 212300 Danyang, Zhenjiang, Jiangsu (CN)
(72) Inventor: CHANG, Che-Wei, 22069 New Taipei City (TW); YANG, Cheng-Kai, 22069 New Taipei City (TW); CHANG, Chuan-Chih, 22069 New Taipei City (TW)
(74) Representative: 2K Patentanwälte Blasberg Kewitz & Reichel

(57) **Abstract**

A wiper structure is provided, including a wiper accessory (1), a wiper body (2), and an arm (3). The wiper accessory (1) features a connecting body (10) with an elastic part (11) located at one end and a pivot slot (100) situated beneath the connecting body. The wiper body (2) is equipped with an accessory base (20) that includes a pivot axle (21) pivotally connected to the pivot slot (100). The arm (3) includes a rod part (30) and a cover (31). The arm (3) is mounted on the wiper accessory (1). Clamping parts (12) are positioned on two sides of the connecting body (10), each featuring a hollow-shaped clamp groove (120) to clamp the accessory base (20). A lower edge (121) of each clamp groove (120) includes a flat portion and slopes downward towards the elastic part (11). Inner walls of the arm (3) include stop edges (311b) that abut the flat portions of the lower edges (121) to limit the arm (3) on the connecting body (10).

## Description

### BACKGROUND OF THE INVENTION

### Technical Field

The present disclosure relates to a windshield wiper for vehicles, specifically a wiper structure and a wiper accessory thereof selected for use with wipers.

### Description of Related Art

A wiper accessory is a component used to connect a wiper to an arm on the vehicle, facilitating easy removal and replacement of the wiper, while ensuring that the wiper, once installed on the arm, does not fall off during the arm's swinging motion.

However, conventional wiper accessories often overly emphasize ease of installation, which can lead to the wiper accessories detaching during excessive arm movement, thereby causing the wipers to fall off and pose a hazard.

In view of this, the inventor aimed to improve and solve these deficiencies by conducting dedicated research and applying theoretical knowledge, ultimately proposing a design that is both reasonable and effective in mitigating these issues.

### SUMMARY OF THE INVENTION

A main objective of the present disclosure is to provide a wiper structure and a wiper accessory thereof that increases the stability of the wiper accessory during assembly, while also considering ease of disassembly and assembly.

In order to achieve the above objective, the present disclosures provide a wiper accessory connected between a wiper body and an arm. The wiper accessory includes a connecting body and an elastic part disposed at one end of the connecting body. The connecting body is pivotally connected to the wiper body, wherein the arm is assembled to the connecting body. Two clamping parts are disposed on two sides of the connecting body respectively, and each clamping part is provided with a clamp groove in a hollow shape extending from downside to upside to clamp the wiper body. A lower edge of each clamp groove on the clamping parts includes a flat portion and is inclined downward towards the elastic part, and the lower edge is configured to limit the arm on the connecting body.

In order to achieve the above objective, the present disclosure provides a wiper structure, including a wiper accessory, a wiper body, and an arm. The wiper accessory includes a connecting body and an elastic part disposed at one end of the connecting body, and the connecting body includes a pivot slot. The wiper body includes an accessory base disposed thereon. The accessory base includes a pivot axle pivotally connected to the pivot slot of the wiper accessory. The arm includes a rod part and a cover arranged at one end of the rod part, wherein the arm mounts on the wiper accessory from another end of the connecting body by the cover. The two clamping parts are disposed on two sides of the connecting body respectively, each clamping part is provided with a clamp groove in a hollow shape extending from downside to upside to clamp the accessory base of the wiper body, a lower edge of each clamp groove includes a flat portion and is inclined downward towards the elastic part, the arm includes a stop edge disposed on an inner wall thereof, and the stop edge abuts against the flat portion of the lower edge to limit the arm on the connecting body.

### BRIEF DESCRIPTION OF THE DRAWINGS

FIG. 1 is a partially exploded perspective view of the present disclosure.
FIG. 2 is a partially assembled perspective view of the present disclosure.
FIG. 3 is a partially assembled cross-sectional view of the present disclosure.
FIG. 4 is a partially assembled cross-sectional view of an internal structure of the present disclosure.
FIG. 5 is a sectional view taken along line 5-5 in FIG. 4.
FIG. 6 is a sectional view taken along line 6-6 in FIG. 4.

### DETAILED DESCRIPTION

In order for the esteemed Examiners to further understand the features and technical content of the present disclosure, please refer to the detailed description and accompanying drawings below. However, these drawings are provided for reference and explanation only and are not intended to limit the scope of this disclosure.

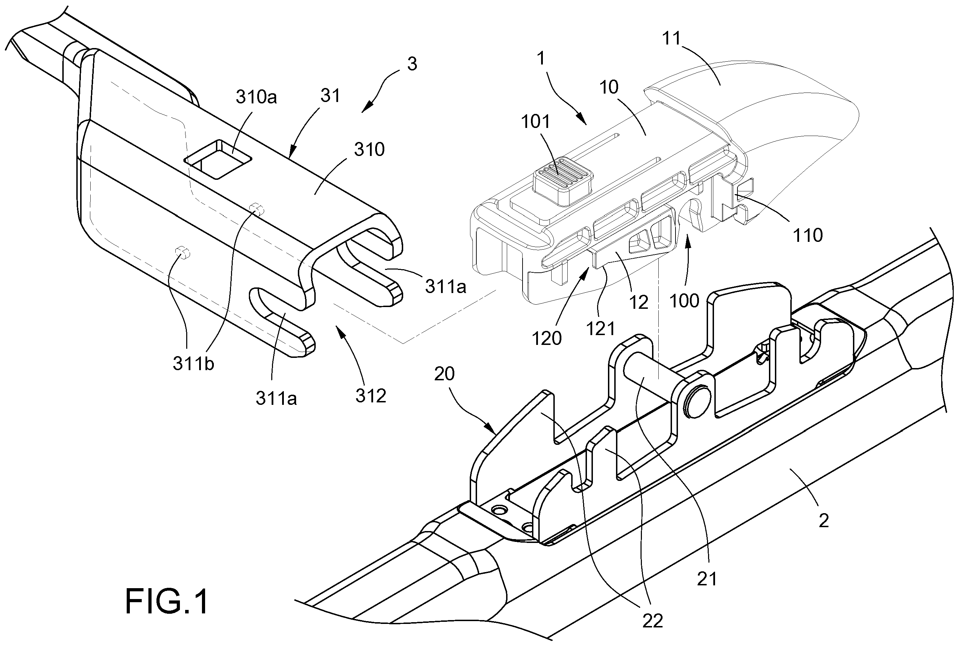

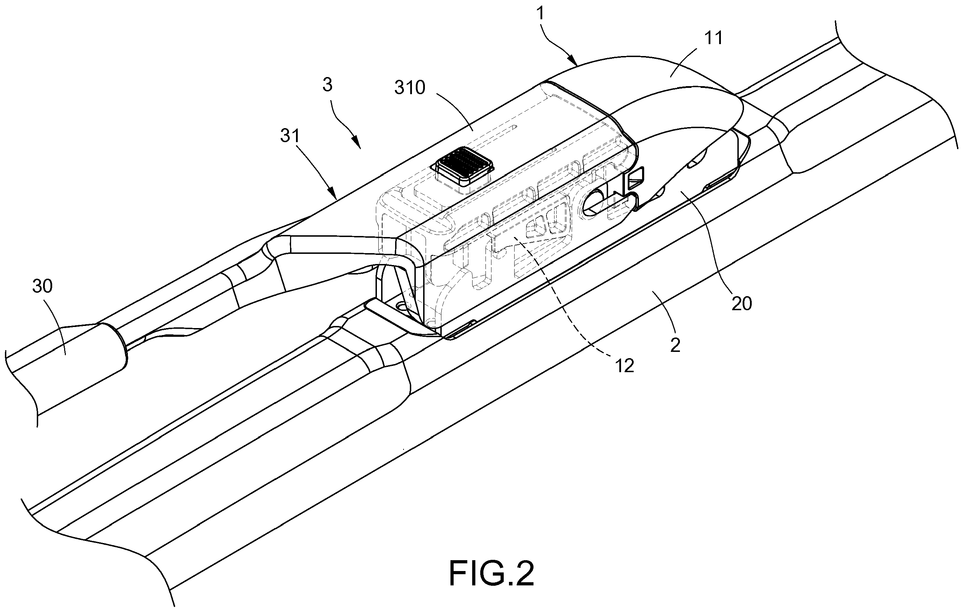

Please refer to FIGS. 1 and 2, which are, respectively, a partially exploded perspective view and a partially assembled perspective view of the present disclosure. This disclosure provides a wiper accessory and a wiper structure having the same. The wiper structure includes a wiper accessory 1, a wiper body 2, and an arm 3. The wiper accessory 1 is used to be connected between the wiper body 2 and the arm 3.

The wiper body 2 is equipped with an accessory base 20 for pivotally connecting the wiper accessory 1 onto the accessory base 20. The accessory base 20 includes a pivot axle 21 laid across the accessory base 20. The accessory base 20 may be formed by two plates set upright and spaced apart. The pivot axle 21 is placed between these two plates.

The arm 3 is mounted on the wiper accessory 1, which in turn enables the arm 3 to drive the wiper body 2 to swing. The arm 3 includes a rod part 30, and a cover 31 disposed at one end of the rod part 30. The cover 31 includes a top portion 310 and two side portions 311 extending downward from the top portion 310. The top portion 310 and the two side portions 311 together enclose to form an insertion space 312, which allows the arm 3 to be mounted on the wiper accessory 1 by inserting the wiper accessory 1 into this insertion space 312.

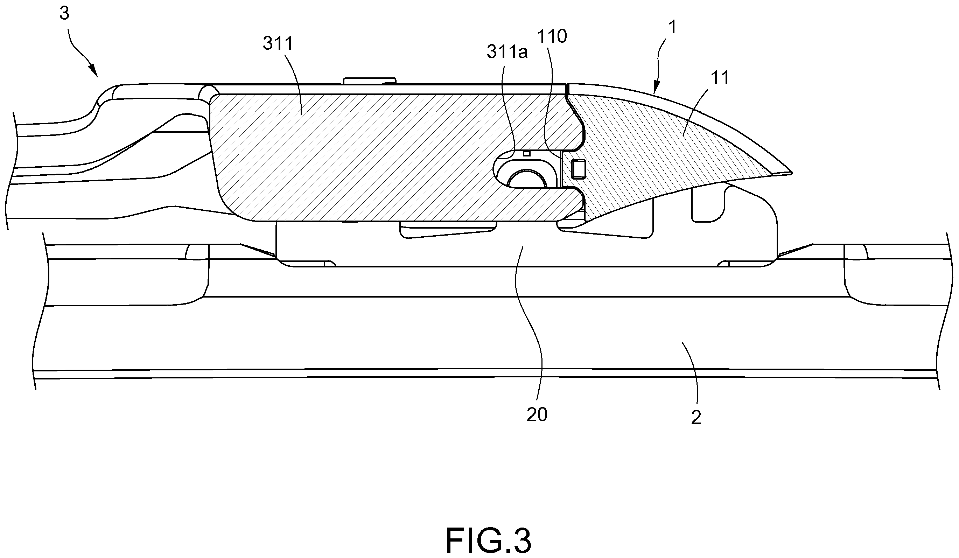

Please also refer to FIGS. 1 to 3, where the wiper accessory 1 features a connecting body 10, and an elastic part 11 located at one end of the connecting body 10. Below the connecting body 10 is a pivot slot 100 that is pivotally connected to the pivot axle 21 of the wiper body 2, allowing the arm 3 to drive the wiper body 1 to swing. The elastic part 11 includes a plurality of fitting sections 110 extending towards the connecting body 10. Two fitting slots 311a are located on two sides of the cover 31 of the arm 3, respectively. Each of the fitting slots 311a is arranged corresponding to the respective fitting section 110. When the cover 31 of the arm 3 is mounted over the wiper accessory 1 from another end of the connecting body 10 through the insertion space 312, the fitting slots 311a on the two side portions 311 are engaged with the fitting sections 110 respectively, serving as an initial assembly step. Furthermore, a positioning block 101 may be disposed on the connecting body 10, and a positioning hole 310a is located on the top portion 310 of the cover 31. The positioning hole 310a is designed to align with the positioning block 101 to facilitate the assembly of the positioning block 101, thereby increasing the integration between the wiper accessory 1 and the cover 31 of the arm 3.

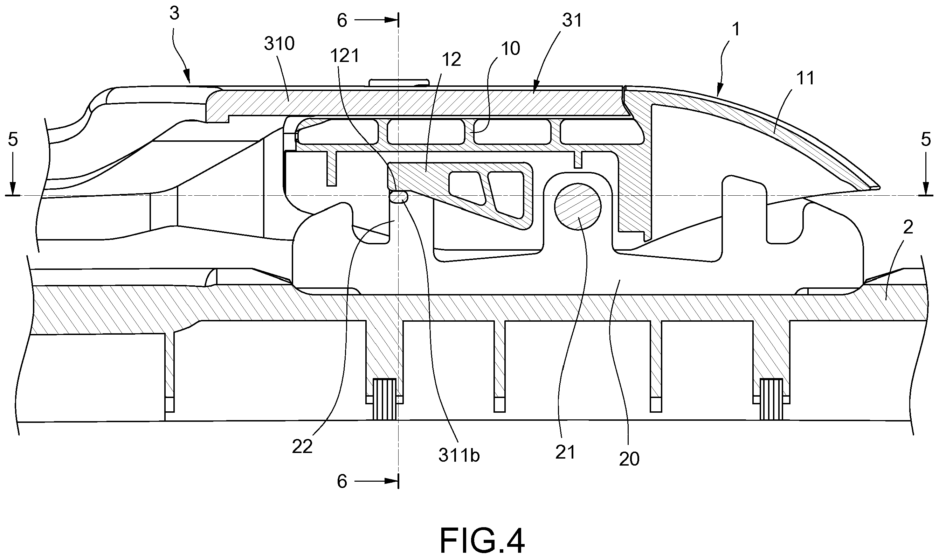

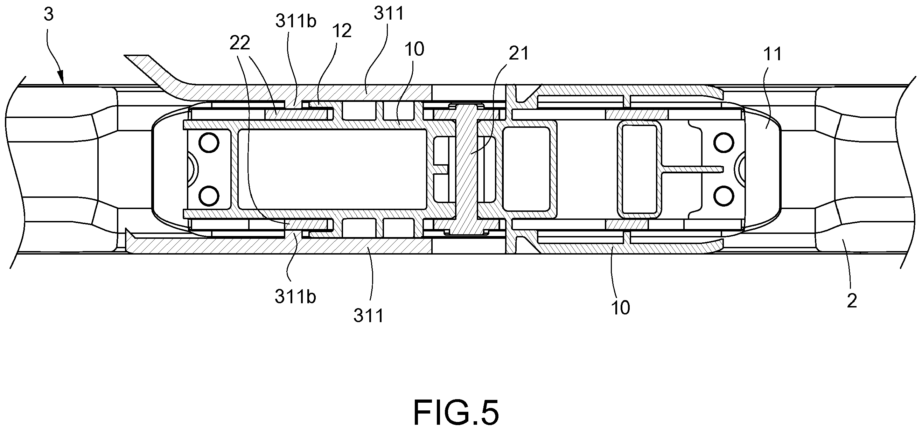

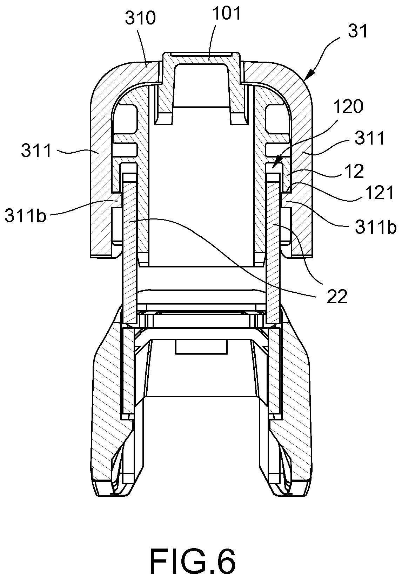

As shown in FIGS. 4 to 6, the disclosure mainly features a clamping part 12 disposed on two sides of the connecting body 10 of the wiper accessory 1. Each clamping part 12 includes a hollow-shaped clamp groove 120 that extends from downside to upside, and the accessory base 20 is equipped with tab portions 22 for insertion into the respective corresponding clamp grooves 120. In the embodiments of this disclosure, the tab portions 22 may be formed on the two plates of the accessory base. Moreover, a lower edge 121 of the clamp groove 120 of the clamping part 12 includes a flat portion and is inclined downward from the flat portion towards the elastic part 11 (as shown in FIG. 4). A stop edge 311b is disposed on an inner wall of each of the two side portions 311 of the cover 31. The stop edge 311b may abut against the flat portion of the lower edge 121 of the clamping part 12, thus preventing the cover 31 from detaching from the connecting body 10 after the fitting slots 311a on the side portions 311 of the cover 31 are engaged with the fitting sections 110 of the elastic part 11 of the wiper accessory 1, while effectively limiting the wiper accessory 3 and the cover 31 of the arm 3 on the wiper body 2.

Therefore, by the structure described above, the wiper accessory and the wiper structure of this disclosure may be realized.

In summary, the present disclosure indeed achieves the purposes described in the specification and addresses the deficiencies known in the conventional techniques.

## Claims

1. A wiper accessory, connected between a wiper body (2) and an arm (3), the wiper accessory (1) comprising:
a connecting body (10), pivotally connected to the wiper body (2), wherein the arm (3) is assembled to the connecting body (10); and
an elastic part (11), disposed at one end of the connecting body (10);
wherein two clamping parts (12) are disposed on two sides of the connecting body (10) respectively, each clamping part (12) is provided with a clamp groove (120) in a hollow shape extending from downside to upside to clamp the wiper body (2), a lower edge (121) of each clamp groove (120) on the clamping parts (12) comprises a flat portion and is inclined downward towards the elastic part (11), and the lower edge (121) is configured to limit the arm (3) on the connecting body (10).

2. The wiper accessory according to claim 1, wherein the connecting body (10) comprises a pivot slot (100) defined on a lower portion thereof to be pivotally connected with the wiper body (2).

3. The wiper accessory according to claim 1, wherein the connecting body (10) comprises a positioning block (101) disposed thereon to be assembled with the arm (3).

4. The wiper accessory according to claim 1, wherein the elastic part (11) comprises a plurality of fitting sections (110) to be assembled with the arm (3), and each fitting section (110) extends towards the connecting body (10).

5. A wiper structure, comprising:
a wiper accessory (1), comprising a connecting body (10) and an elastic part (11) disposed at one end of the connecting body (10), the connecting body (10) comprising a pivot slot (100) defined on a lower portion thereof;
a wiper body (2), comprising an accessory base (20) disposed thereon, the accessory base (20) comprising a pivot axle (21) pivotally connected to the pivot slot (100) of the wiper accessory (1); and
an arm (3), comprising a rod part (30) and a cover (31) arranged at one end of the rod part (30), wherein the arm (3) mounts on the wiper accessory (1) from another end of the connecting body (10) by the cover (31);
wherein two clamping parts (12) are disposed on two sides of the connecting body (10) respectively, each clamping part (12) is provided with a clamp groove (120) in a hollow shape extending from downside to upside to clamp the accessory base (20) of the wiper body (2), a lower edge (121) of each clamp groove (120) comprises a flat portion and is inclined downward towards the elastic part (11), the arm (3) comprises a stop edge (311b) disposed on an inner wall thereof, and the stop edge (31 1b) abuts against the flat portion of the lower edge (121) to limit the arm (3) on the connecting body (1).

6. The wiper structure according to claim 5, wherein the accessory base (20) of the wiper body (2) comprises a tab portion (22) corresponding to the clamp groove (120) to be inserted to the clamp groove (120).

7. The wiper structure according to claim 6, wherein the accessory base (20) of the wiper body (2) comprises two plates disposed upright and spaced apart, and the pivot axle (21) is arranged horizontally between the plates.

8. The wiper structure according to claim 5, wherein the cover (31) of the arm (3) comprises a top portion (310) and two side portions (311) extending downward from the top portion (310), an insertion space (312) is enclosed by the top portion (310) and the two side portions (311), and the arm (3) is mounted on the connecting body (10) of the wiper accessory (1) through the insertion space (312).

9. The wiper structure according to claim 8, wherein the elastic part (11) of the wiper accessory (1) comprises a plurality of fitting sections (110) extending towards the connecting body (10), two fitting slots (311a) are respectively defined on two side portions (311) of the cover (31) of the arm (3), and the fitting slots (311a) are arranged corresponding to and engaged with the fitting sections (110) respectively.

10. The wiper structure according to claim 8, wherein a positioning block (101) is disposed on the connecting body (10) of the wiper accessory (1), a positioning hole (310a) is defined on the top portion (310) of the cover (31), and the positioning hole (310a) is arranged corresponding to and assembled with the positioning block (101).

## Amended claims

### Amended claims in accordance with Rule 137(2) EPC.

1. A wiper accessory, connected between a wiper body (2) and an arm (3), the wiper body (2) comprising an accessory base (20), the wiper accessory (1) comprising:
a connecting body (10), pivotally connected to the wiper body (2), wherein the arm (3) is assembled to the connecting body (10); and
an elastic part (11), disposed at one end of the connecting body (10);
wherein two clamping parts (12) are disposed on two sides of the connecting body (10) respectively, each clamping part (12) is provided with a clamp groove (120) in a hollow shape extending from downside to upside to clamp the wiper body (2), a lower edge (121) of each clamp groove (120) on the clamping parts (12) comprises a flat portion and is inclined downward towards the elastic part (11), and the lower edge (121) is configured to limit the arm (3) on the connecting body (10),
**characterized in that** the accessory base (20) of the wiper body (2) comprises a tab portion (22) corresponding to the clamp groove (120) to be inserted to the clamp groove (120).

2. The wiper accessory according to claim 1, wherein the connecting body (10) comprises a pivot slot (100) defined on a lower portion thereof to be pivotally connected with the wiper body (2).

3. The wiper accessory according to claim 1, wherein the connecting body (10) comprises a positioning block (101) disposed thereon to be assembled with the arm (3).

4. The wiper accessory according to claim 1, wherein the elastic part (11) comprises a plurality of fitting sections (110) to be assembled with the arm (3), and each fitting section (110) extends towards the connecting body (10).

5. A wiper structure, comprising:
the wiper accessory (1) according to any of the preceding claims;
the wiper body (2), wherein the accessory base (20) comprises a pivot axle (21) pivotally connected to the pivot slot (100) of the wiper accessory (1); and
the arm (3), comprising a rod part (30) and a cover (31) arranged at one end of the rod part (30), wherein the arm (3) mounts on the wiper accessory (1) from another end of the connecting body (10) by the cover (31).

6. The wiper structure according to claim 5, wherein the accessory base (20) of the wiper body (2) comprises two plates disposed upright and spaced apart, and the pivot axle (21) is arranged horizontally between the plates.

7. The wiper structure according to claim 5, wherein the cover (31) of the arm (3) comprises a top portion (310) and two side portions (311) extending downward from the top portion (310), an insertion space (312) is enclosed by the top portion (310) and the two side portions (311), and the arm (3) is mounted on the connecting body (10) of the wiper accessory (1) through the insertion space (312).

8. The wiper structure according to claim 7, wherein the elastic part (11) of the wiper accessory (1) comprises a plurality of fitting sections (110) extending towards the connecting body (10), two fitting slots (311a) are respectively defined on two side portions (311) of the cover (31) of the arm (3), and the fitting slots (311a) are arranged corresponding to and engaged with the fitting sections (110) respectively.

9. The wiper structure according to claim 7, wherein a positioning block (101) is disposed on the connecting body (10) of the wiper accessory (1), a positioning hole (310a) is defined on the top portion (310) of the cover (31), and the positioning hole (310a) is arranged corresponding to and assembled with the positioning block (101).
